# EUROPEAN PATENT SPECIFICATION

(11) **EP 1 180 324 B1**
(45) Date of publication and mention of the grant of the patent: **24.05.2006**
(21) Application number: 00830581.5
(22) Date of filing: 11.08.2000
(51) Int. Cl.: A01K 29/00, A01M 31/00, G01V 8/10, G01S 5/16, G08B 13/196, F41G 7/22

(54) **Method and apparatus for observing and determining the position of targets in geographical areas**
Verfahren und Vorrichtung zur Beobachtung und Bestimmung der Position von Zielobjekten in geographischen Gebieten
Procédé et dispositif pour l'observation et la détermination de la position de cibles dans des zones géographiques

(43) Date of publication of application: 20.02.2002
(73) Proprietor: TD Group S.p.A., 56010 Pisa (IT); D.R.E.AM. Italia S.c.r.L., 52014 Ponte a Poppi (AR) (IT); Envitech S.a.S., 50019 Sesto Fiorentino (FI) (IT)
(72) Inventor: Benvenuti, Marco C., 50019 Sesto Fiorentino FI (IT); Lorenzi, Lorenzo, 56100 Pisa (PI) (IT); Tellini, Guido Florenzano, 52011 Bibbiena (AR) (IT)
(74) Representative: Celestino, Marco

(56) References cited:
- EP-A- 0 797 177
- WO-A-97/35433
- US-A- 5 592 151
- US-A- 5 764 786

## Description

The invention described below relates to the environmental field, and more precisely it refers to a method for observing and determining the position of targets in geographical areas, such as for example for monitoring wild animals, for surveillance against poaching, for environmental monitoring and for surveillance in general of protected areas.

Furthermore, the invention relates to an infrared camera apparatus that carries out this method.

### Background of the invention

In protected areas and in all other environments where wild animals are checked for conservation purposes, campaigns of observation are often organised for collecting data about the kind and number of animals present on the territory. Such campaigns are often organised during night, by means of detection methods that use powerful light beams that floodlight the fields to observe, and provide then the identification of the species, the number of animals observed, even by photography. Then, in laboratory, by means of cartography, maps are created of the species observed. The maps are used for the area administration as well as for scientific, didactic, statistic purposes.

The steps of handling the data recorded, however, are laborious and carried out in a completely manual way, and require long time.

Light beams cannot be used for long periods by the Furthermore, the presence of vegetation between the observer and the targets hinders the observation same.

Moreover, shooting in the visible field is limited to not more than a few hundreds of metres, according also to the size of the animals observed and to the type of vegetation.

Infrared cameras are also known that allow to cover a greater distance, in particular for night shooting, even if they are not suitable to calculate distance, angles and positions.

WO9735433 It relates to a system for detecting fires from an aircraft or from a tower and helping the ground fire brigades to reach quickly and exactly the critical points. Pictures of the fire are taken by a camera arranged on the aircraft or on the tower and superimposed to previously taken pictures. The IR pictures are superimposed to identical visible pictures taken from the same points: no distances are calculated, and no topographic positions are calculated. The positions are determined only after superimposition of the actual pictures and the previously taken pictures.

### Summary of the invention

It is therefore object of the present invention to provide a method for observing and determining the positions of targets in geographical areas that has not the drawbacks of the known systems.

It is, furthermore, object of the invention to provide an apparatus for observing and determining the position of targets in geographical areas that is easy to use, that allows high quality night shooting, that calculates the position of the observer, of the targets, the distance involved, and is capable of shooting from mobile means.

The invention has also the target of obtaining a set of data that are used either in real time or later by means of analysis in laboratory.

In the following description reference is made to the organisation of campaigns of observation of wild animals, being it clear that this method can be extended also to other fields such as for example:
- to the field of the environmental monitoring (i.e. surveillance of rubbish tips, of sewage discharges in see and rivers, etc.);
- to surveillance against poaching;
- to the field of surveillance against intruders within
- to the field of surveillance against intruders within enclosures or fences or coastal access.

These and other objects are achieved by the invention, that according to a first aspect comprises a infrared camera, i.e. for detecting heat radiation, whose characteristic is that motor means are provided for directing the infrared camera, the operations of directing being made according to angles in at least a vertical and horizontal plane.

The following are also provided:
- motor means for directing the infrared camera;
- means for controlling the means directing capable of emitting signals responsive to the angular position of a shot image with respect to a reference system;
- means for recording images selected among the shot images in association to the signals of the controlling means ;

Preferably, the following are also provided:
- means for sensing the conditions of monitoring, such as sensors of relative humidity and temperature,
- means for computing the distance of the target from the camera,
- a unit of data allocation, for carrying out the association between the images, the signals of the controlling means, signals of distance, humidity, temperature,
- a monitor for displaying the images shot by the infrared camera in real time.

In particular, the means for directing the infrared camera comprise servomotors that allow its rotation, between 0° and 360° about an azimuthal angle and between 90° and -45° about an elevation angle. Angular data are determined by encoders associated to the servomotors and then recorded by the allocation unit (Data Logger).

According to a preferred embodiment of the method, the operator on board of a mobile operative unit, by means of the infrared camera, finds out the targets displayed on a monitor and records the relevant targets by means of a command that associates automatically the images to the topographic data and optionally to the weather data. Therefore, all the data determined during a campaign are associated to a relative shooting record, by means of a correlation time or by recording in parallel on magnetic, optical or CD supports. This way, it is easy to get the data corresponding to each sighted target.

Advantageously, an infrared camera with the means for directing, the controlling means and of recording as well as the monitor are mounted on a first mobile operative unit, whereas in a second fixed remote operative station the recorded data are analysed. The mobile operative unit can be mounted on self propelled means, or on carried means. In the first case the mobile unit is equipped with a satellite positioning system (GPS) that provides in real time the data of geographical location of the mobile unit. Such data are then associated to the other data stored in the allocation unit.

Finally, after the monitoring step, all the data and the images stored are loaded in the database of a computer in the fixed station. In this fixed station an operator analyses the recorded data and creates the maps of the sighted targets or simply counts the sighted targets, sorting them by type.

Advantageously, all the data thus downloaded are read automatically and stored in the database of the sighted targets, so that they can be quickly and easily examined, in a later moment than observation.

### Brief description of the drawings

Further characteristics of the method and of the apparatus for observing and determining the positions of targets in geographical areas according to the present invention will be made clearer with the following description of an embodiment thereof, exemplifying but not limitative, with reference to the attached drawings, wherein:
- figure 1 shows a block diagram of the apparatus according to the invention, comprising two operative units I and II, respectively mobile and fixed units;
- Figure 2 is a diagrammatical view of the steps of building up a database of the sighted targets.
- figure 3 shows a perspective view of the apparatus according to the invention, mounted on the roof of an all-terrain vehicle;
- figures 4A and 4B show a diagrammatical view, respectively a elevation and a top plan view, of a step of the campaign of observation, with indication of the elevation and azimuthal angles, respectively β and α.
- figure 5 is a block diagram of an auxiliary data acquisition system.

### Description of a preferred embodiment

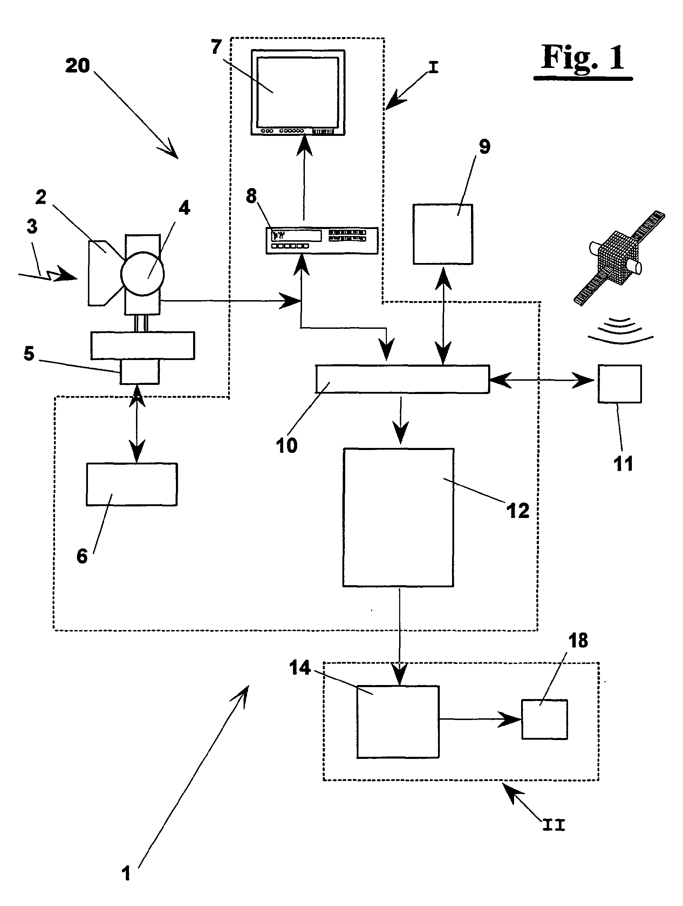

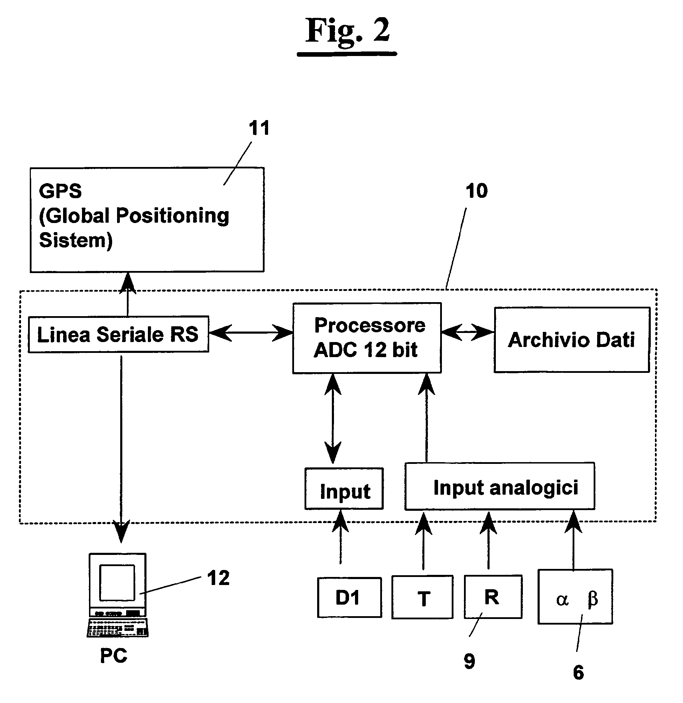

A system 1, for observing and determining the distance of targets in geographical areas, in the present example for night monitoring wild animals in parks comprises, as shown in figure 1, a mobile observation unit consisting of:
- a video camera 2 of the infrared radiation 3 type;
- motors 4 and 5 for directing infrared camera 2 according to azimuthal and elevation angles;
- a control unit 6 of said directing motors 4 and 5;
- a monitor 7, which receives images from infrared camera 2;
- a video recorder 8, which records the images shot by infrared camera 2;
- sensors 9 of detection of temperature and humidity;
- a data logger 10 (figure 2) for acquisition and recordal of the data from the various apparatus and for association of such data to the images;
- a satellite positioning system 11 (GPS) ;
- means 12 for analysis of data [PC], wherein a dedicated software and a geographical information system (GIS) reside to manage the detected data and to carry out the determination of the geographical coordinates of the sighted targets.

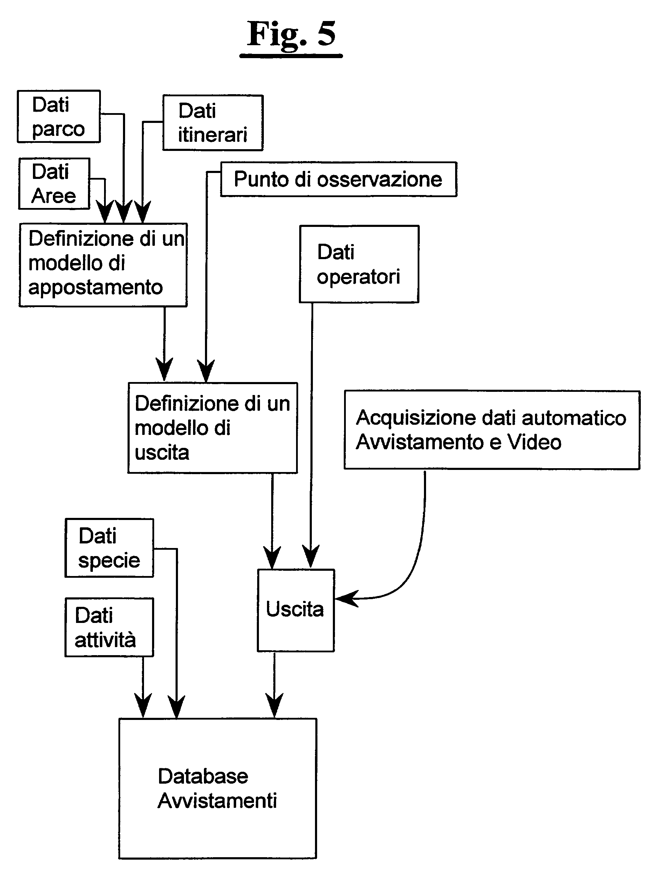

Furthermore, it comprises a fixed operative unit II, having a PC work station 14 wherein a GIS system and a "frame grabber" reside. In work station 14 the data and all the images associated to the monitoring made by mobile unit I are elaborated. Once the analysis of the single observations is completed by PC 14, a database is created of the sighted animals according to the diagram of figure 5.

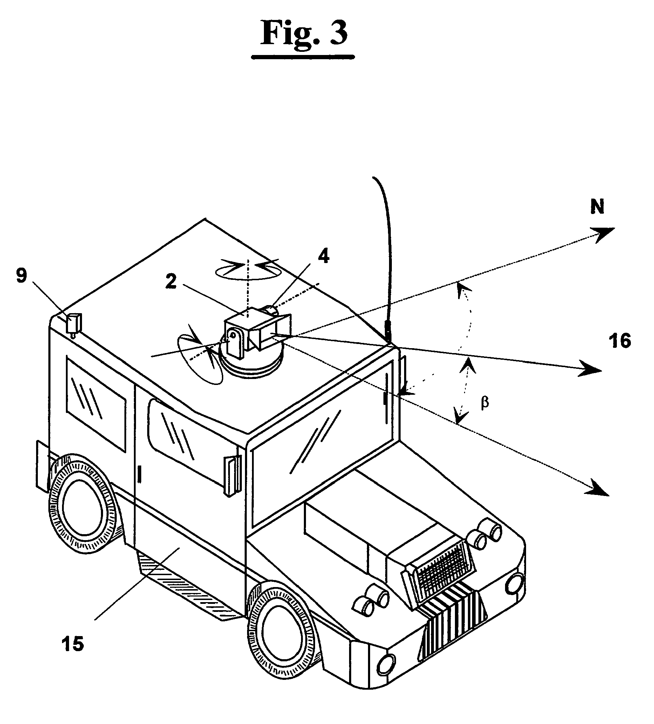

After the initialisation of system 1, according to the invention, by setting date, time, room temperature, relative humidity, the counters of the controlling means are reset. At this point, the mobile drive unit carries out the operations of monitoring on board of an all-terrain vehicle 15 (figure 3) where an operator on board, after having pointed infrared camera 2 in the direction 16 of the sought target, for example an animal, carries out automatically the operations of focusing the target by the camera. In particular, by the means for directing 4 and 5 the rotation of infrared camera 2 is possible in a horizontal plane according to an azimuth angle α with respect to the north N and in a vertical plane according to an elevation angle β. Servomotors 4 and 5 operate and support infrared camera 2 in its angular rotation.

The images shot by infrared camera 2 are displayed in real time on monitor 7, in vehicle 15. Video recorder 8 records in digital format each shot image.

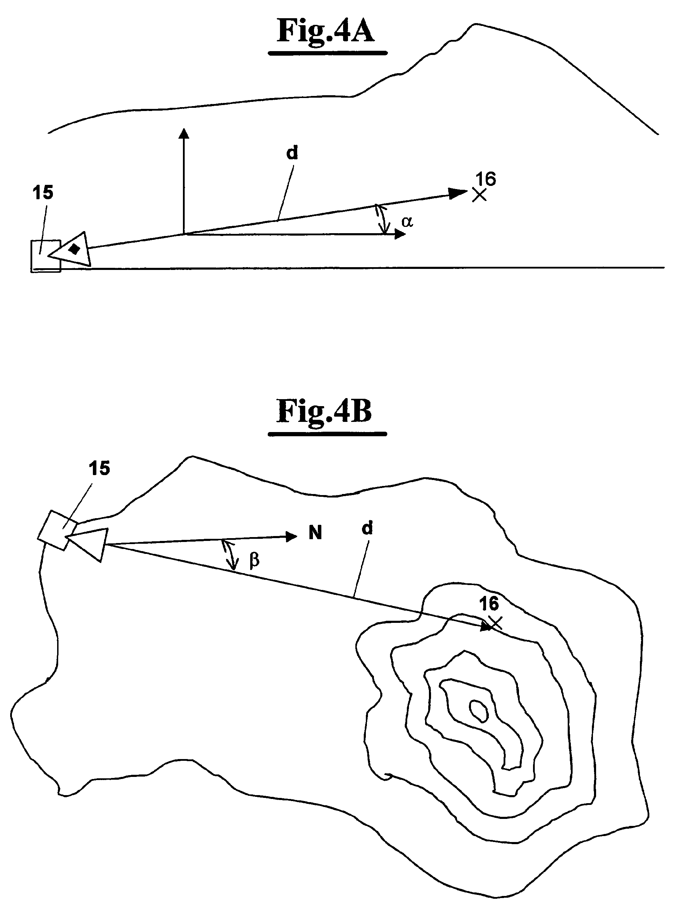

Once a target 16 is sighted, its relative position is detected as well with respect to camera 2. In fact, according to the relative position with respect to the camera, given by parameters d, α and β shown in figures 4A and 4B, its absolute topographic position is determined on a three-dimensional digitalized model of the territory, by means of a dedicated software with GIS cartography.

The measure of the distance 17 and the coordinates of the target 16 can be determined in one of the following ways:
a) Intersection of the axis of observation with the digital model GIS of the territory: according to direction angles α and β measured by the system, the axis of observation 16 is calculated and intersected with the three-dimensional model of the territory, suitably georeferenced, determining on it the point observed and then its geographical position. In this process it is important that the direction angles are referred to the direction of the north.
b) Evaluation of the focusing distance of the target: this method is based on the calculus of the focusing distance of the infrared camera by sensing the stroke of the zoom apparatus, not described in detail. The measure of the distance in metres is given by the sensor by means of a dedicated software interface. The data of the distance can be supplied at the moment of detection of the sighted target.
c) Comparison with reference templates: a set of infrared reference images, shot in a controlled environment at a known distance for every type of animal, are compared with the images shot on the field. The measure is done a posteriori; the implementation of a interactive system is provided that can be used directly on place by means of laptop computer.
d) Triangulation: the angular position of the target with respect to the camera is detected from two known points whose distance from each other can be measured by an appropriate instrument, the distance of the target being calculated by means of trigonometric triangulation.

The latter step of computing the distance in one of the ways above described can be carried out directly on the field in the mobile station through personal computer 12 that provides all the necessary software instruments. Otherwise, that step can be done in fixed station II at the end of the campaign.

The apparatus 1, according to the invention, is advantageously equipped with a connection to a satellite positioning system GPS (FIGURE 1,2), that in real time gives the geographical coordinates relative to the mobile infrared camera.

In a first step, therefore, all the data collected, i.e. the shot images, the data relative to temperature and humidity, the numerical coordinates of the sighted targets, the distance of the targets with respect to camera 2 etc., are selectively recorded onto the data acquisition means 10.

In a second step, then, the data recorded are suitably examined and compared with a database library of images and data and eventually added to the database of the sighted animals 18 (figure 2) in order to update it.

## Claims

1. A method for observing and determining the position of animals in geographical areas, in particular for monitoring wild animals, or for surveillance against poaching, **characterised in that** it comprises the steps of:
- providing an infrared video camera, capable of being directed angularly in a self-driven way for sighting chosen targets and for obtaining infrared images thereof,
- arranging the infrared video camera in a selected geographical area of known coordinates or of coordinates determined automatically;
- directing said infrared video camera up to sighting a target to shoot;
- recording the image of the target;
- evaluating the distance of said target from the video camera;
- reading the angular position and computing the topographic coordinates of said target with respect to the video camera;
- allocating said angular position and/or said coordinates on means for storing data and associating each image recorded to a corresponding set of data of position;
- classifying the recorded images and mapping the sighted targets.

2. Method according to claim 1, wherein to said infrared video camera directions are imparted as angular motions according to a vertical and horizontal plane, said angular motions being measured as data that are respectively function of a first vertical elevation angle and of a second azimuth horizontal angle.

3. Method according to claim 1, wherein said infrared video camera is mounted on mobile means whose coordinates are determined through a satellite positioning system associated to said infrared video camera.

4. Method according to claim 1 wherein the position of said sighted target is obtained by means of a GIS system having three-dimensional digital models of geographical areas.

5. An apparatus for observing and determining the position of animals in geographical areas, in particular for monitoring wild animals, for surveillance against poaching, **characterised in that** it comprises:
- an infrared video camera, i.e. with a detection system of infrared images,
- motor means for directing the infrared video camera, the operations of directing by the motor means being made according to angles in at least a vertical and horizontal plane ;
- means for controlling the means for directing capable of emitting angular signals responsive to the position of an image with respect to a reference system;
- means for recording a selected image among other shot images in association to the signals of the controlling means
wherein said infrared video camera is mounted on a self-propelled unit, a satellite positioning system (GPS) being provided that gives in real time the data of geographical location of the self-propelled unit, said geographical data being associated to other data stored in the allocation unit.

6. Apparatus according to claim 5, wherein an allocation unit is provided for carrying out the association between a recorded image and said angular signals responsive to the position of the sighted target with respect to a coordinates reference system centred at said infrared video camera.

7. Apparatus according to claim 5, wherein means are provided for computing the distance of the sighted target from the infrared video camera based on the variation of the focus distance in said infrared video camera.

8. Apparatus according to claim 5, wherein said means for directing the infrared video camera comprise servomotors that allow its rotation between 0° and 360°degrees about an azimuthal angle and between 90° and -45° about an elevation angle, the angular data being determined by encoders associated to the servomotors and capable of emitting signals towards said allocation unit.

9. Apparatus according to claim 5, wherein to said infrared video camera at least a monitor is associated for visualisation in real time of the images of said targets, sensors being provided for detection of temperature and of relative humidity of the environment where said infrared video camera is present.

## Patentansprüche

1. Verfahren zum Beobachten und Bestimmen der Position von Tieren in geographischen Gebieten, insbesondere zur Kontrolle von Wildtieren oder zur Überwachung gegen Wilderei, **dadurch gekennzeichnet, dass** es die folgenden Schritte umfasst:
- Bereitstellen einer Infrarotvideokamera, die in Bezug auf den Winkel selbst angesteuert gelenkt werden kann, um diese Ziele zu sichten und Infrarotbilder davon zu erhalten,
- Anordnen der Infrarotvideokamera in einem ausgewählten geographischen Gebiet mit bekannten Koordinaten oder mit automatisch bestimmten Koordinaten;
- Lenken der Infrarotvideokamera bis zum Sichten eines aufzunehmenden Ziels;
- Aufzeichnen des Bilds des Ziels;
- Ermitteln der Entfernung des Ziels von der Videokamera;
- Ablesen der Winkelstellung und Berechnen der topographischen Koordinaten des Ziels in Bezug auf die Videokamera;
- Zuordnen der Winkelstellung und/oder der Koordinaten in Mitteln zum Speichern von Daten und Zuordnen jedes aufgezeichneten Bilds zu einer entsprechenden Menge von Daten der Position;
- Klassifizieren der aufgezeichneten Bilder und Abbilden der gesichteten Ziele.

2. Verfahren nach Anspruch 1, **dadurch gekennzeichnet, dass** der Infrarotvideokamera Richtungen als Winkelbewegungen gemäß einer vertikalen und einer horizontalen Ebene mitgeteilt werden, wobei die Winkelbewegungen als Daten gemessen werden, die jeweils Funktionen eines ersten, vertikalen Höhenwinkels und eines, zweiten horizontalen Seitenwinkels sind.

3. Verfahren nach Anspruch 1, **dadurch gekennzeichnet, dass** die Infrarotvideokamera an beweglichen Mitteln angebracht ist, deren Koordinaten durch ein der Infrarotvideokamera zugeordnetes Satellitenpositionsbestimmungssystem bestimmt werden.

4. Verfahren nach Anspruch 1, **dadurch gekennzeichnet, dass** die Position des gesichteten Ziels mittels eines GIS-Systems erhalten wird, das dreidimensionale digitale Modelle geographischer Gebiete aufweist.

5. Vorrichtung zum Beobachten und Bestimmen der Position von Tieren in geographischen Gebieten, insbesondere zum Kontrollieren von Wildtieren zur Überwachung gegen Wilderei, **dadurch gekennzeichnet, dass** sie umfasst:
- eine Infrarotvideokamera, d. h. eine mit einem Erfassungssystem von Infrarotbildern,
- Motormittel zum Lenken der Infrarotvideokamera, wobei die Operationen des Lenkens durch die Motormittel gemäß Winkeln wenigstens in einer vertikalen und in einer horizontalen Ebene erfolgen;
- Mittel zum Steuern der Mittel zum Lenken, die in Reaktion auf die Position eines Bilds in Bezug auf ein Referenzsystem Winkelsignale aussenden können;
- Mittel zum Aufzeichnen eines ausgewählten Bilds unter anderen aufgenommenen Bildern in Zuordnung zu den Signalen der Steuermittel,
wobei die Infrarotvideokamera an einer selbst angetriebenen Einheit angebracht ist, wobei ein Satellitenpositionsbestimmungssystem (GPS) bereitgestellt ist, das in Echtzeit die Daten des geographischen Orts der selbst angetriebenen Einheit gibt, wobei die geographischen Daten anderen in der Zuordnungseinheit gespeicherten Daten zugeordnet sind.

6. Vorrichtung nach Anspruch 5, **dadurch gekennzeichnet, dass** eine Zuordnungseinheit vorgesehen ist, um in Reaktion auf die Position des gesichteten Ziels in Bezug auf ein Koordinatenbezugssystem mit dem Mittelpunkt in der Infrarotvideokamera die Zuordnung zwischen einem aufgezeichneten Bild und den Winkelsignalen auszuführen.

7. Vorrichtung nach Anspruch 5, **dadurch gekennzeichnet, dass** Mittel vorgesehen sind, um anhand der Änderung der Brennweite in der Infrarotvideokamera die Entfernung des gesichteten Ziels von der Infrarotvideokamera zu berechnen.

8. Vorrichtung nach Anspruch 5, **dadurch gekennzeichnet, dass** die Mittel zum Lenken der Infrarotvideokamera Stellmotoren umfassen, die ihre Drehung zwischen 0° und 360° Grad um einen Seitenwinkel und zwischen 90° und -45° um einen Höhenwinkel ermöglichen, wobei die Winkeldaten durch Codierer bestimmt werden, die den Stellmotoren zugeordnet sind und die Signale zu der Zuordnungseinheit aussenden können.

9. Vorrichtung nach Anspruch 5, **dadurch gekennzeichnet, dass** der Infrarotvideokamera wenigstens ein Monitor zur Visualisierung der Bilder der Ziele in Echtzeit zugeordnet ist, wobei Sensoren zur Erfassung der Temperatur und der relativen Feuchtigkeit der Umgebung bereitgestellt sind, in der die Infrarotvideokamera anwesend ist.

## Revendications

1. Procédé pour l'observation et la détermination de la position d'animaux dans des zones géographiques, en particulier pour la surveillance d'animaux sauvages ou pour la surveillance contre le braconnage, **caractérisé en ce qu'**il comprend les étapes consistant à :
- fournir une caméra vidéo infrarouge, pouvant s'orienter automatiquement de façon angulaire afin de viser des cibles sélectionnées et d'obtenir des images infrarouges de ces cibles,
- agencer la caméra vidéo infrarouge dans une zone géographique sélectionnée dont les coordonnées sont connues ou déterminées automatiquement ;
- orienter ladite caméra vidéo infrarouge de façon à viser une cible à atteindre ;
- enregistrer l'image de la cible ;
- évaluer la distance entre ladite cible et la caméra vidéo ;
- lire la position angulaire et calculer les coordonnées topographiques de ladite cible par rapport à la caméra vidéo ;
- attribuer ladite position angulaire et/ou lesdites coordonnées à des moyens permettant de stocker des données et d'associer chaque image enregistrée à un groupe correspondant de données de position ;
- classer les images enregistrées et établir la position des cibles visées.

2. Procédé selon la revendication 1, dans lequel des directions sont imparties à ladite caméra vidéo infrarouge en tant que mouvements angulaires selon un plan vertical et horizontal, lesdits mouvements angulaires étant mesurés comme des données qui sont respectivement fonction d'un premier angle d'élévation vertical et d'un second angle d'azimut horizontal.

3. Procédé selon la revendication 1, dans lequel ladite caméra vidéo infrarouge est montée sur des moyens mobiles dont les coordonnées sont déterminées au moyen d'un système de positionnement par satellite associé à ladite caméra vidéo infrarouge.

4. Procédé selon la revendication 1, dans lequel la position de ladite cible visée est obtenue au moyen d'un système d'information géographique GIS ayant des modèles numériques en trois dimensions de zones géographiques.

5. Dispositif pour l'observation et la détermination de la position d'animaux dans des zones géographiques, en particulier pour la surveillance d'animaux sauvages et pour la surveillance contre le braconnage, **caractérisé en ce qu'**il comprend :
- une caméra vidéo infrarouge, c'est-à-dire avec un système de détection des images infrarouges,
- des moyens de motorisation pour l'orientation de la caméra vidéo infrarouge, les opérations d'orientation par les moyens de motorisation étant effectuées selon des angles selon au moins un plan vertical et horizontal ;
- des moyens pour le contrôle des moyens d'orientation permettant d'émettre des signaux angulaires en réponse à la position d'une image par rapport à un système de référence ;
- des moyens pour l'enregistrement d'une image sélectionnée parmi d'autres images prises en association avec les signaux des moyens de contrôle,
dans lequel ladite caméra vidéo infrarouge est montée sur une unité autopropulsée, un système de positionnement par satellite (GPS) étant fourni donnant en temps réel les données de l'emplacement géographique de l'unité autopropulsée, lesdites données géographiques étant associées à d'autres données stockées dans l'unité d'attribution.

6. Dispositif selon la revendication 5, dans lequel une unité d'attribution est prévue pour la réalisation de l'association entre une image enregistrée et lesdits signaux angulaires en réponse à la position de la cible visée par rapport à un système de référence des coordonnées situé au niveau de ladite caméra vidéo infrarouge.

7. Dispositif selon la revendication 5, dans lequel des moyens sont prévus pour le calcul de la distance entre la cible visée et la caméra vidéo infrarouge sur la base de la variation de la mise au point dans ladite caméra vidéo infrarouge.

8. Dispositif selon la revendication 5, dans lequel lesdits moyens pour l'orientation de la caméra vidéo infrarouge comprennent des servomoteurs qui permettent sa rotation entre 0° et 360° autour d'un angle azimutal et entre 90° et -45° autour d'un angle d'élévation, les données angulaires étant déterminées par des codeurs associés aux servomoteurs et permettant d'émettre des signaux vers ladite unité d'attribution.

9. Dispositif selon la revendication 5, dans lequel au moins un écran est associé à ladite caméra vidéo infrarouge pour la visualisation en temps réel des images desdites cibles, des capteurs étant fournis pour la détection de la température et de l'humidité relative de l'environnement dans lequel ladite caméra vidéo infrarouge se trouve.
